# FASCICULE DE BREVET EUROPEEN

(11) **EP 0 988 595 B1**
(45) Date de publication et mention de la délivrance du brevet: **13.02.2002**
(21) Numéro de dépôt: 98929484.8
(22) Date de dépôt: 04.06.1998
(51) Int. Cl.: G06F 11/00

(54) **PROCEDE DE COMMANDE D'UN MICROPROCESSEUR INTEGRE AVEC UNE MEMOIRE MORTE DE PROGRAMME ET CIRCUIT INTEGRE POUR LA MISE EN OEUVRE DU PROCEDE**
VERFAHREN ZUR STEUERUNG EINES INTEGRIERTEN MIKROPROZESSORS MIT EINEM FESTWERTPROGRAMMSPEICHER UND INTERGRIERTE SCHALTUNG ZUR DURCHFÜHRUNG DIESES VERFAHRENS
METHOD FOR CONTROLLING AN INTEGRATED MICROPROCESSOR WITH A PROGRAMMABLE READ-ONLY-MEMORY AND INTEGRATED CIRCUIT FOR IMPLEMENTING SAID METHOD

(30) Priorité: 10.06.1997 FR 9707157
(43) Date de publication de la demande: 29.03.2000
(73) Titulaire: SAGEM SA, 75116 Paris (FR)
(72) Inventeur: HEURTAUX, Frédéric, F-13610 Le Puy Sainte Réparade (FR); PARIN, William, F-95600 Eaubonne (FR)
(74) Mandataire: Bloch, Gérard
(86) Numéro de dépôt international: FR9801132
(87) Numéro de publication internationale: WO9857264

(56) Documents cités:
- EP-A- 0 514 806
- GB-A- 2 227 584

## Description

Les systèmes informatiques comportent souvent des circuits spécifiques, développés à la demande pour une application particulière. Un circuit de ce genre doit exécuter une fonction relativement complexe et comporte en général un microprocesseur, des mémoires vives (RAM) et mortes (ROM) et divers registres et circuits de logique combinatoire. Devront être considérés comme équivalents de ce qui est ici appelé microprocesseur, tous ensembles d'exécution d'instructions, comme par exemple un séquenceur programmable.

Le circuit se présente sous la forme d'une puce de circuit intégré, dont la compacité permet de réduire le coût, le volume et la consommation tout en accroissant la vitesse de fonctionnement, par rapport à un ensemble de composants discrets.

L'industriel produisant le système réalise en général une maquette équivalente en composants discrets pour mettre au point le schéma électrique et le logiciel de commande du microprocesseur.

Les spécifications fonctionnelles du circuit spécifique étant ainsi établies, l'industriel passe commande d'un lot de tels circuits auprès d'un fabricant, ou fondeur, de circuits intégrés. A réception du lot, il le teste pour vérifier sa conformité à la spécification avant de l'accepter. Pour cela, il a été en général prévu dès l'origine un ensemble émulateur, intégré au circuit, qui permet d'en commander les divers constituants à partir d'une liaison ou bus de commande externe, auxquels on fournit des données d'entrée à traiter.

Or, il arrive parfois que la spécification ne soit pas satisfaisante, ou encore qu'elle soit défectueuse et que, en particulier, le logiciel ne puisse traiter correctement certaines combinaisons d'états des diverses données d'entrée que traite le microprocesseur. Comme le logiciel a été gravé en mémoire morte ROM, afin d'éviter de devoir le recharger à chaque mise sous tension, toute modification, même minime, de la mémoire ROM est très coûteuse car le fondeur doit dessiner de nouveaux masques de gravure, avec l'inconvénient de la perte de temps correspondante qui obère la sortie du système nouveau.

La présence invention vise à s'affranchir des défauts de logiciel dans la mémoire morte des circuits spécifiques.

A cet effet, elle concerne tout d'abord un procédé de commande d'un microprocesseur intégré dans un circuit électronique comportant une mémoire morte contenant un logiciel d'une séquence d'instructions pour les faire exécuter par le microprocesseur, sous la commande de moyens séquenceurs, des moyens de réception de données pour alimenter le microprocesseur, une liaison de commande externe du microprocesseur à travers des moyens de test, procédé dans lequel, en cas de modification à apporter à une portion de séquence du logiciel en mémoire morte, les moyens de test commandent les moyens séquenceurs pour dérouter le microprocesseur des instructions de la portion de séquence à modifier sur les instructions des moyens de réception de données, procédé caractérisé par le fait que les moyens de test inhibent le microprocesseur lorsqu'ils en commandent le déroutement.

Ainsi, on évite une collision transitoire entre une instruction issue de la mémoire morte et une nouvelle instruction, issue des moyens de réception de données.

On remarquera que le document EP-A-0 514 806 n'enseigne pas de moyens permettant d'éviter un état transitoire susceptible de perturber le fonctionnement des circuits du microprocesseur intégré. Ce document n'enseigne pas de moyens de test inhibant le processeur lorsqu'ils en commandent le déroutement d'adresse.

De préférence, préalablement au déroutement, la séquence d'instruction de déroutement est mémorisée dans une mémoire vive des moyens de réception. Cela évite la perte de temps liée à la transmission en entrée et permet ainsi de garantir une vitesse d'exécution plus élevée.

L'invention concerne aussi un circuit intégré pour la mise en oeuvre du procédé de l'invention, comportant un microprocesseur, une mémoire morte contenant un logiciel d'une séquence d'instructions pour les faire exécuter par le microprocesseur, sous la commande de moyens séquenceurs, des moyens de réception de données pour alimenter le microprocesseur, une liaison de commande externe du microprocesseur à travers des moyens de test, comportant des moyens comparateurs agencés pour comparer l'état des moyens séquenceurs à un état déterminé par la liaison de commande et pour commander en conséquence un déroutement des moyens séquenceurs sur les moyens de réception de données, un microprocesseur maître, agencé pour commander le déroutement du processeur d'exécution, à travers une interface d'entrée/sortie à usage général, la liaison de commande et les moyens de test, le microprocesseur d'exécution de la séquence d'instructions assurant, en temps partagé, la fonction de microprocesseur maître, caractérisé en ce que les moyens de test comprennent des moyens pour inhiber le processeur lorsqu'ils en commandent le déroutement.

L'invention sera mieux comprise à l'aide de la description suivante d'un mode de mise en oeuvre préféré du procédé de l'invention, en référence au dessin annexé, sur lequel :
- la figure 1 est un schéma par blocs d'un circuit intégré pour la mise en oeuvre du procédé de l'invention et
- la figure 2 illustre le principe du déroutement.

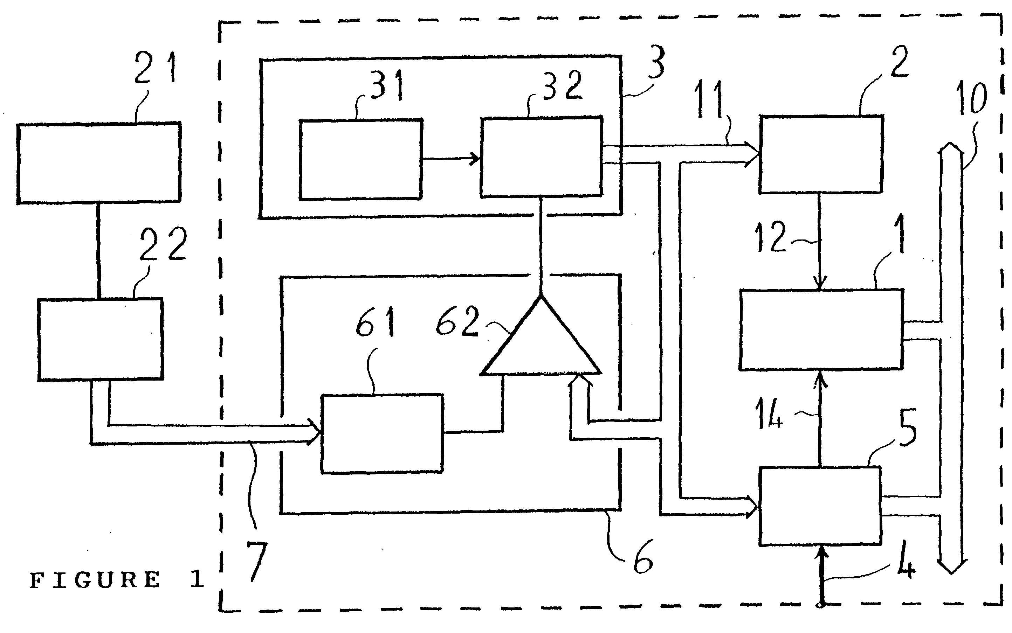

Le circuit intégré représenté comporte, dans le cadre en ligne pointillée de la figure 1, un microprocesseur 1, une mémoire morte ROM 2, un séquenceur 3, une liaison 4, 14, de réception de données, ici depuis l'extérieur du circuit intégré, aboutissant au microprocesseur 1 ici à travers une mémoire vive 5, ici de type RAM, et un émulateur de test 6 relié à une liaison 7 de commande de celui-ci, ici un bus à la norme JTAG. A l'énumération des éléments ci-dessus, on comprendra donc que par microprocesseur on entend un bloc unité arithmétique de calcul, entouré d'éléments pour le faire fonctionner selon un logiciel déterminé, en le commandant et en échangeant avec lui des données qu'il traite ou exploite.

Dans cet exemple, il est en outre prévu un microprocesseur maître 21, commandant, par une interface 22 d'entrée/sortie à usage général, appelée GPIO, le bus JTAG 7. Les deux microprocesseurs 1 et 21, ici sur la même plaquette de silicium, pourraient être confondus en un seul, c'est-à-dire que le microprocesseur 1 assurerait en temps partagé la fonction du microprocesseur 21, exposée plus loin.

Le bus 7 est ici entièrement interne au circuit intégré, mais il aurait encore pu y être prévu une liaison avec l'extérieur pour le rendre accessible à des moyens d'observation externes ou encore à des moyens de commande externes de l'émulateur 6.

De même, la liaison 4 pourrait être reliée au microprocesseur maître comme 21 et être ainsi entièrement interne à la plaquette portant le microprocesseur 1, esclave, pour être alimentée en données à partir d'une mémoire de chargement intégrée, ou simplement associée, au microprocesseur 21 et écrite depuis l'extérieur.

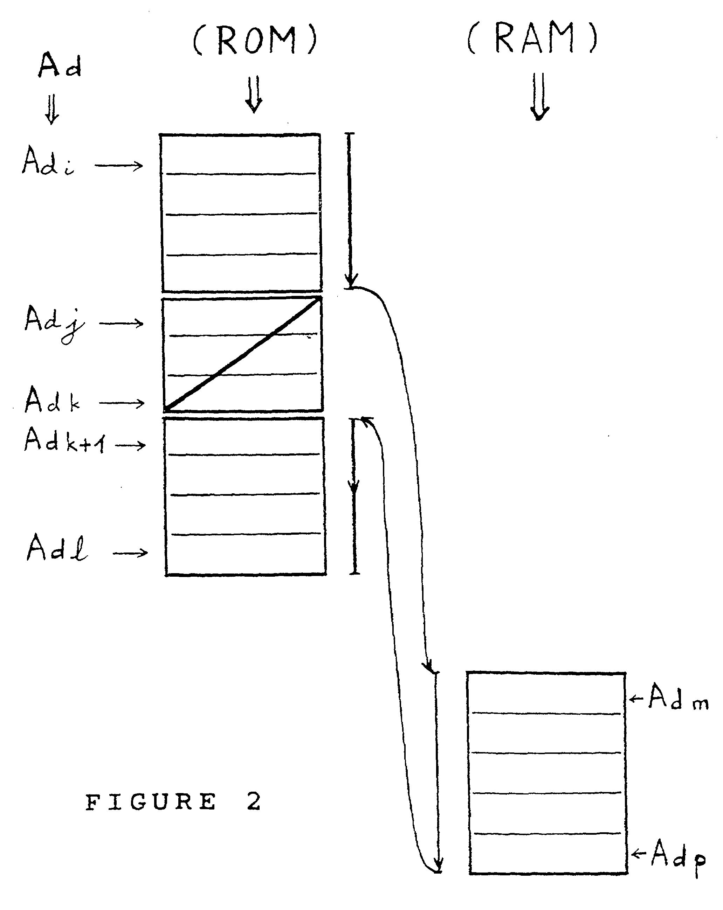

Le séquenceur 3 comporte un oscillateur 31 qui alimente l'ensemble des constituants fonctionnels du circuit intégré, par des liaisons non représentées. Un compteur ordinal 32 du séquenceur 3 avance au rythme de l'oscillateur 31 et fournit ainsi, au fil du temps, une séquence d'adresses Ad successives (fig. 2), en l'absence de commande contraire. L'adresse issue du compteur 32 sert à adresser la mémoire ROM 2 par un bus général d'adresse 11, relié aussi à la mémoire RAM 5. La mémoire ROM 2 contient une séquence d'instructions d'un logiciel de commande du microprocesseur 1, et transmet à ce dernier, par un bus d'instructions 12, l'instruction adressée par le compteur ordinal 32. La référence 10 désigne un bus de données relié en particulier au microprocesseur 1 et à la liaison 4, ici à travers la mémoire RAM 5. Le bus 14 prolonge la liaison 4 de la mémoire RAM 5 jusqu'au microprocesseur 1 pour lui fournir des instructions à exécuter, en provenance de la liaison 4.

L'émulateur de test 6 comporte un registre 61, accessible en écriture par le bus JTAG 7, qui commande une entrée d'un comparateur 62 dont l'autre entrée est reliée au bus d'adresse 11. La sortie du comparateur 62 commande le compteur ordinal 32, plus précisément elle permet de modifier sa progression naturelle fournissant des adresses successives.

Le fonctionnement du circuit intégré selon le procédé de l'invention va maintenant être expliqué plus en détails.

La figure 2 représente une séquence d'instructions stockées dans la mémoire ROM 2 à des adresses Adi à Adl balayées successivement par le compteur ordinal 32 pour faire exécuter au microprocesseur 1 le programme des instructions considérées.

Il a été détecté, par mise en fonctionnement du circuit intégré dans l'appareil destiné à le recevoir, ou par test sur maquette, que la séquence ci-dessus comportait un défaut de conception de logiciel, ou bogue, nécessitant de ne pas exécuter la portion, barrée en biais sur la figure 2, de séquence d'instructions d'adresses intermédiaires Adj à Adk. Il peut s'agir d'un défaut ponctuel à l'une de ces adresses ou d'un défaut plus global de spécification d'une fonction élémentaire, telle qu'un module objet logiciel qui doit être remplacé par un autre.

Une portion de séquence de remplacement a été mise au point et ici elle a été fournie au circuit intégré par la liaison 4 et mémorisée dans la mémoire RAM 5, de l'adresse Adm à l'adresse Adp. Cette mémorisation, préalable à l'exécution, masquera ainsi, lors de l'utilisation, les temps de transfert depuis l'extérieur.

Dans cet exemple, les adresses Adm à Adp sont externes à la plage d'adresses Adi à Adl car les diverses liaisons entre les éléments 1, 2, 3, 4, 5, 6 sont en fait réalisées par un bus d'adresse général (comme 11) et un bus de données général (comme 10). Les bus 12 et 14 de commande du microprocesseur 1 sont en particulier ici confondus, si bien qu'il est exclu dans ce cas d'activer par adressage à la fois la mémoire ROM 2 et la mémoire RAM 5 et de sélectionner spatialement, par un multiplexeur, l'une parmi les deux instructions lues des mémoires ROM 2 et RAM 5. Afin d'éviter de parcourir la portion Adj - Adk défectueuse, on commande, par l'émulateur de test 6, un déroutement à l'adresse Adj.

Le microprocesseur 21 envoie donc à l'émulateur de test 6, à travers le bus JTAG 7, un ordre, ou instruction, de déroutement qui, ici, n'est émis que de façon temporaire et est mémorisé, à titre de piège logiciel, dans le registre 61 pour être exécuté en temps voulu selon l'état (adresse) du séquenceur 3. L'ordre de déroutement est un état sous forme d'une adresse Adj par laquelle il passe.

Cet ordre de déroutement constitue une instruction de saut à l'adresse Adm de début de la portion de séquence de remplacement, pour dérouter ainsi le microprocesseur 1 des instructions de la portion de séquence à modifier Adj - Adk sur les instructions Adm - Adp de la mémoire RAM 5 de réception de données. En pratique, pour éviter une collision transitoire entre l'instruction issue de la mémoire ROM 2 et la nouvelle, issue de la mémoire RAM 5, l'émulateur 6 émet, au passage à l'adresse Adj de déroutement, une instruction d'inhibition du microprocesseur 1, par une liaison non représentée. L'adresse Adm est donc dans ce cas prévue comme étant inutilisée pour commander le microprocesseur 1.

La commande du saut de déroutement consiste à décaler l'adresse fournie par le compteur ordinal 32, par exemple par addition d'une constante positive ou négative, pour un adressage indexé. Cette addition peut intervenir dans un additionneur de décalage, non représenté, en aval du compteur 32, transparent à l'état normal (lecture de la mémoire ROM 2) et, sinon, recevant la constante (vecteur de décalage) en provenance du bus 7, à travers l'émulateur 6 qui l'a mémorisée, ou encore en provenance de la liaison 4, plus précisément de la mémoire RAM 5. Le compteur 32 continue donc à progresser normalement et la sortie de l'additionneur de décalage ci-dessus peut repasser, par disparition commandée de la constante, à une adresse de retour Adk+1 qui suit la dernière adresse Adk de la portion remplacée dans la séquence principale Adi - Adl, après lecture de la dernière instruction Adp de la portion de remplacement. Ceci suppose cependant l'égalité de longueurs entre les portions Adj - Adk et Adm - Adp ou l'ajustement de cette dernière si elle était trop courte.

Dans le cas général, l'instruction de saut de déroutement sera cependant une instruction de forçage du compteur 32 et il en sera de même pour le retour Adp → Adk+1 à la séquence principale Adi - Adl, si un tel retour est prévu.

Dans le cas du seul ajout d'une portion de séquence Adm - Adp à la séquence principale Adi - Adl, sans rien enlever (alors Adj = Adk+1), le compteur ordinal 32 peut être bloqué en l'état par le comparateur 62. Un compteur en aval, remplaçant l'additionneur évoqué ci-dessus avançant avec l'oscillateur 31, permet de balayer la portion de remplacement Adm - Adp puis l'émulateur 6 l'inhibe pour revenir à l'adresse de déroutement Adj mémorisée dans le compteur 32 et l'incrémenter d'une unité pour passer à l'adresse de retour Adk+1.

On peut ainsi tout aussi bien corriger un défaut qu'améliorer un logiciel du commerce pour l'adapter à des besoins complémentaires.

On remarquera qu'une seule liaison d'entrée du circuit intégré peut suffire pour, par un aiguillage approprié, transmettre à l'émulateur de test l'ordre de déroutement et, au microprocesseur 1, la portion d'instructions complémentaires ou de remplacement. En particulier, il peut être prévu que l'émulateur de test reçoive l'ordre de déroutement par une liaison comme la liaison 4 ou les bus généraux (10,11) évoqués plus haut.

L'invention présente un intérêt d'autant plus élevé que le circuit intégré est complexe, c'est-à-dire coûteux et long à mettre au point. Elle trouve cependant aussi application dans le cas plus général d'un circuit électronique à plusieurs composants, puisque, même si la mémoire morte, ROM ou équivalente, est accessible et donc interchangeable avec une autre correctement inscrite, le délai pour graver la nouvelle mémoire peut être nettement plus élevé que l'écriture de quelques instructions de correction en mémoire vive.

Il est d'ailleurs à noter qu'il est parfaitement envisageable de dérouter la séquence d'instructions en mémoire morte sur elle-même. En effet, tout logiciel est défini par l'ordre selon lequel on exécute diverses instructions appartenant à un jeu déterminé d'instructions.

Or, on dispose déjà, en mémoire morte, des divers types d'instructions de commande, à des adresses connues, qui sont prévues pour être lues séquentiellement, par adressage direct, par les adresses issues du compteur ordinal 32, avec ponctuellement un ou plusieurs sauts.

On peut donc, en variante, prévoir un fonctionnement par adressage indirect, à travers l'émulateur. Très schématiquement, celui-ci comporterait (61) une séquence, lue de façon ordonnée par le compteur ordinal 32, d'adresses de la mémoire morte 2, cette dernière fournissant ainsi au microprocesseur 1 toute nouvelle séquence voulue d'instructions déjà mémorisées.

L'émulateur de test 6, avec la liaison 7 qui la commande, peut en effet remplacer la mémoire RAM 5 et la liaison 4, 14, en mémorisant (61) une séquence de déroutements permettant de lire des instructions dans la séquence Adi - Adl dans un ordre modifié (adressage indirect), c'est-à-dire une succession de tronçons, ou même d'instructions élémentaires, de cette séquence Adi - Adl, donc sans devoir entrer en mémoire vive les instructions elles-mêmes. La séquence d'instructions annexes en mémoire RAM de l'exemple initial, dont le séquencement était implicitement défini par les adresses Adm - Adp qui étaient lues dans leur ordre naturel, serait ainsi remplacée par une séquence d'adresses de saut dans le registre 61. Ce dernier ferait donc alors, par ses sorties, fonctionnellement partie des moyens séquenceurs du circuit intégré.

## Revendications

1. Procédé de commande d'un microprocesseur (1) intégré dans un circuit électronique comportant une mémoire morte (2) contenant un logiciel d'une séquence d'instructions pour les faire exécuter par le microprocesseur (1), sous la commande de moyens séquenceurs (3), des moyens de réception de données (4, 14, 5) pour alimenter le microprocesseur (1), une liaison (7) de commande externe du microprocesseur (1) à travers des moyens de test (6); procédé dans lequel, en cas de modification à apporter à une portion (Adj - Adk) de séquence du logiciel en mémoire morte (2), les moyens de test (6) commandent les moyens séquenceurs (3) pour dérouter le microprocesseur (1) des instructions de la portion de séquence à modifier (Adj - Adk) sur les instructions (Adm - Adp) des moyens de réception de données (4, 14, 5), procédé **caractérisé par le fait que** les moyens de test (6) inhibent le microprocesseur (1) lorsqu'ils en commandent le déroutement (Adm).

2. Procédé selon la revendication 1, dans lequel les instructions (Adm-Adp) des moyens de réception de données (4, 14, 5) commandent le microprocesseur (1) par adressage indirect d'instructions appartenant au logiciel en mémoire morte (2).

3. Procédé de commande selon l'une des revendications 1 et 2, dans lequel, préalablement au déroutement, la séquence d'instructions de déroutement est mémorisée dans une mémoire vive (5) des moyens de réception.

4. Circuit intégré pour la mise en oeuvre du procédé de la revendication 1, comportant un microprocesseur (1), une mémoire morte (2) contenant un logiciel d'une séquence d'instructions pour les faire exécuter par le microprocesseur (1), sous la commande de moyens séquenceurs (3), des moyens (4, 14, 5) de réception de données pour alimenter le microprocesseur (1), une liaison (7) de commande externe du microprocesseur (1) à travers des moyens de test (6), comportant des moyens comparateurs (62) agencés pour comparer l'état des moyens séquenceurs (3) à un état déterminé par la liaison de commande (7) et pour commander en conséquence un déroutement des moyens séquenceurs (3) sur les moyens de réception de données (4, 14, 5), un microprocesseur maître (21), agencé pour commander le déroutement du processeur (1) d'exécution, à travers une interface d'entrée/sortie à usage général (22), la liaison de commande (7) et les moyens de test (6), le microprocesseur (1) d'exécution de la séquence d'instructions assurant, en temps partagé, la fonction de microprocesseur maître (21) **caractérisé en ce que** les moyens de test (6) comprennent des moyens pour inhiber le processeur lorsqu'ils en commandent le déroutement.

5. Circuit intégré selon la revendication 4, dans lequel les moyens de réception de données comportent une mémoire vive (5).

6. Circuit intégré selon l'une des revendications 4 et 5, dans lequel le bus de commande (7) est interne au circuit.

7. Circuit intégré selon l'une des revendications 4 et 5, dans lequel le bus de commande (7) est accessible depuis l'extérieur du circuit.

8. Circuit intégré selon l'une des revendications 4 à 7, dans lequel le bus de commande (7) est relié à des moyens externes au circuit.

9. Circuit intégré selon l'une des revendications 4 à 8, dans lequel les moyens de réception de données (4, 14, 5) sont reliés au processeur maître (21).

## Patentansprüche

1. Verfahren zur Steuerung eines Mikroprozessors (1), der in eine elektronische Schaltung integriert ist und folgendes aufweist:
- einen Festspeicher (2), der eine Software für eine Folge von Befehlen enthält, um sie durch den Mikroprozessor (1) unter der Steuerung von Befehlsgebermitteln (3) auszuführen,
- Mittel (4, 14, 5) für den Empfang von Daten, um den Mikroprozessors (1) zu versorgen,
- eine Verbindung (7) zur externen Steuerung des Mikroprozessors (1) über Testmittel (6),
wobei bei dem Verfahren im Fall einer Modifizierung, die an einem Teil (Adj - Adk) einer Befehlsfolge der Software im Festspeicher (2) vorzunehmen ist, die Testmittel (6) die Befehlsgebermittel (3) steuern, um den Mikroprozessor (1) von den Befehlen des zu modifizierenden Befehlsfolgeteils (Adj - Adk) auf die Befehle (Adm - Adp) der Mittel (4, 14, 5) für den Datenempfang umzuleiten,
wobei das Verfahren
**dadurch gekennzeichnet ist, dass**
die Testmittel (6) den Mikroprozessor (1) hemmen, wenn sie die Umleitung (Adm) steuern.

2. Verfahren nach Anspruch 1,
wobei die Befehle (Adm-Adp) der Mittel (4, 14, 5) für den Datenempfang den Mikroprozessor (1) durch indirekte Adressierung von Befehlen steuern, die der Software im Festspeicher (2) angehören.

3. Verfahren zur Steuerung nach Anspruch 1 oder 2,
wobei vor der Umleitung die Folge von Befehlen zur Umleitung in einen Arbeitsspeicher (5) der Empfangsmittel gespeichert wird.

4. Integrierte Schaltung zur Ausführung des Verfahrens von Anspruch 1, die folgendes aufweist:
- einen Mikroprozessor (1),
- einen Festspeicher (2), der eine Software für eine Folge von Befehlen enthält, um sie durch den Mikroprozessor (1) unter der Steuerung von Befehlsgebermitteln (3) auszuführen,
- Mittel (4, 14, 5) für den Empfang von Daten, um den Mikroprozessors (1) zu versorgen,
- eine Verbindung (7) zur externen Steuerung des Mikroprozessors (1) über Testmittel (6), die Vergleichsmittel (62) aufweisen, die angeordnet sind, um den Status der Befehlsgebermittel (3) mit einem Status zu vergleichen, der durch die Steuerverbindung (7) bestimmt ist, und um in der Folge eine Umleitung der Befehlsgebermittel (3) auf die Datenempfangsmittel (4, 14, 5) zu steuern,
- einen Hauptmikroprozessor (21), der angeordnet ist, um die Umleitung des Ausführungs-Mikroprozessors (1) über eine Allzweck-Eingabe-Ausgabe-Schnittstelle (22), die Steuerverbindung (7) und die Testmittel (6) zu steuern, wobei der Mikroprozessor (1) zur Ausführung der Befehlsfolge im Time-sharing die Funktion eines Hauptmikroprozessors (21) gewährleistet,
**dadurch gekennzeichnet, dass**
die Testmittel (6) Mittel umfassen, um den Mikroprozessor zu hemmen, wenn sie seine Umleitung steuern.

5. Integrierte Schaltung nach Anspruch 4,
wobei die Datenempfangsmittel einen Arbeitsspeicher (5) aufweisen.

6. Integrierte Schaltung nach Anspruch 4 oder 5,
wobei der Steuerbus (7) schaltkreisintern ist.

7. Integrierte Schaltung nach Anspruch 4 oder 5,
wobei der Steuerbus (7) von außerhalb der Schaltung zugänglich ist.

8. Integrierte Schaltung nach einem der Ansprüche 4 bis 7,
wobei der Steuerbus (7) mit Mitteln verbunden ist, die sich außerhalb der Schaltung befinden.

9. Integrierte Schaltung nach einem der Ansprüche 4 bis 8,
wobei die Datenempfangsmittel (4, 14, 5) mit dem Hauptprozessor (21) verbunden sind.

## Claims

1. Method for controlling a microprocessor integrated (1) within an electronic circuit comprising a read-only memory (2) containing software of a sequence of instructions in order for them to be executed by the microprocessor (1) under the control of sequencing means (3), data reception means (4, 14, 5) to supply the microprocessor (1), a connection (7) for external control of the microprocessor (1) via test means (6), a method in which in the event of modification to be made to a sequence portion (Adj - Adk) of the software in the read-only memory (2), the test means (6) control the sequencing means (3) in order to divert the microprocessor (1) from the instructions of the sequence portion (Adj - Adk) to be modified to the instructions (Adm - Adp) of the data reception means (4, 14, 5), the method being **characterised in that** the test means (6) inhibit the microprocessor (1) when they are controlling the diverting (Adm) thereof.

2. Method according to claim 1, wherein the instructions (Adm - Adp) of the data reception means (4, 14, 5) control the microprocessor (1) by indirect addressing of instructions appertaining to the software in the read-only memory (2).

3. Control method according to any one of claims 1 and 2, wherein, prior to the diversion, the sequence of diverting instructions is stored in a random-access memory (5) of the reception means.

4. Integrated circuit for implementing the method according to claim 1, comprising a microprocessor (1), a read-only memory (2) containing software of a sequence of instructions in order for them to be executed by the microprocessor (1) under the control of sequencing means (3), data reception means (4, 14, 5) to supply the microprocessor (1), a connection (7) for external control of the microprocessor (1) via test means (6), comprising comparator means (62) arranged to compare the state of the sequencing means (3) with a state determined by the control connection (7) and consequently to control diversion from the sequencing means (3) to the data reception means (4, 14, 5), a master microprocessor (21) arranged to control the diverting of the execution processor (1) via a general purpose input/output interface (22), the control connection (7) and the test means (6), the microprocessor (1) for execution of the sequence of instructions ensuring operation of the master microprocessor (21) in a time-shared manner, **characterised in that** the test means (6) comprise means for inhibiting the processor when they are controlling the diverting thereof.

5. Integrated circuit according to claim 4, wherein the data reception means comprise a random-access memory (5).

6. Integrated circuit according to any one of claims 4 and 5, wherein the control bus (7) is internal to the circuit.

7. Integrated circuit according to any one of clams 4 and 5, wherein the control bus (7) is accessible from outside the circuit.

8. Integrated circuit according to any one of claims 4 to 7, wherein the control bus (7) is connected to means external to the circuit.

9. Integrated circuit according to any one of claims 4 to 8, wherein the data reception means (4, 14, 5) are connected to the master processor (21).
